# EUROPEAN PATENT SPECIFICATION

(11) **EP 2 848 433 B1**
(45) Date of publication and mention of the grant of the patent: **27.07.2016**
(21) Application number: 14180460.9
(22) Date of filing: 11.08.2014
(51) Int. Cl.: B60C 11/12, B60C 11/04, B60C 11/03

(54) **Pneumatic tire**
Luftreifen
Pneu

(30) Priority: 11.09.2013 JP 2013188652
(43) Date of publication of application: 18.03.2015
(73) Proprietor: SUMITOMO RUBBER INDUSTRIES LIMITED, Kobe-shi, Hyogo-ken (JP)
(72) Inventor: Kishida, Masahiro, Kobe-shi, Hyogo-ken, 651-0072 (JP); Kurosawa, Hiroyuki, Kobe-shi, Hyogo-ken, 651-0072 (JP)
(74) Representative: Manitz, Finsterwald & Partner GbR

(56) References cited:
- EP-A1- 2 014 485
- EP-A1- 2 463 120
- WO-A1-2012/049274
- FR-A1- 2 926 037

## Description

### BACKGROUND OF THE INVENTION

### Field of the Invention

The present invention relates to pneumatic tires that enable improvement of noise performance without deteriorating drainage performance.

### Description of the Background Art

In general, a tread portion of a pneumatic tire has main grooves that extend continuously in the tire circumferential direction in order to smoothly drain water on a road surface backward in the tire rotating direction. However, during running on a dry road surface, standing wave is generated in air that flows in the main grooves, to generate pipe resonance (see, for example, Japanese Laid-Open Patent Publication No. 2003-300403). The pipe resonance is known as a significant noise generated by tires. A main groove having a small groove volume has been suggested in order to improve noise performance of a pneumatic tire.

However, when the groove volume of the main groove is reduced, a problem arises that drainage performance is deteriorated. Thus, noise performance and drainage performance conflict with each other, and improvement of both the performances in a balanced manner is difficult.

WO 2012/049274 A1 and FR 2 926 037 each disclose a pneumatic tire in accordance with the preamble of claim 1.

EP 2 463 120 A1 discloses a pneumatic tire whose tread portion has land portions that include resonators, which are recessed inwardly in the radial direction of the tire and form a pre-determined space when the rib-like land portion makes contact with the road surface, and which also communicate with the circumferential grooves of the tread portion.

### SUMMARY OF THE INVENTION

The present invention is made in view of the aforementioned situations, and a main object of the present invention is to provide a pneumatic tire that has a fundamental structure in which a land portion adjacent to a main groove includes improved sipes and enables improvement of noise performance without deteriorating drainage performance.

The present invention is directed to a pneumatic tire having a tread portion in which at least one main groove continuously extends in a tire circumferential direction, and at least one land portion is adjacent to the main groove. In the pneumatic tire, the land portion includes a plurality of first sipes that are spaced from each other in the tire circumferential direction. Each of the first sipes includes: a circumferential portion that extends along the tire circumferential direction; and an axial portion that extends from at least one of end portions of the circumferential portion toward the main groove.

In the pneumatic tire of the present invention, the axial portion preferably communicates with the main groove.

In the pneumatic tire of the present invention, the axial portion is preferably formed on each of both the end portions of the circumferential portion in each first sipe.

In the pneumatic tire of the present invention, it is preferable that the land portion has an interruption portion formed between the first sipes adjacent to each other in the tire circumferential direction, and the interruption portion has no sipes, and when, in a normal state where the tire is mounted to a normal rim, is inflated with air to a normal internal pressure, and is under no load, a normal load is applied to the tire, and the tire is contacted with a flat ground surface with a camber angle of 0° and is rotated once, at least one interruption portion always appears on a ground contact surface of the tread portion.

The pneumatic tire of the present invention preferably includes a second sipe that continuously extends in the tire circumferential direction, and the second sipe is preferably formed so as not to intersect the first sipes.

In the pneumatic tire of the present invention, a depth of the first and/or second sipes preferably ranges from 1.5 mm to 5.0 mm.

In the pneumatic tire of the present invention, a length, in the tire circumferential direction, of the interruption portion preferably ranges from 2 mm to 10 mm.

In the pneumatic tire of the present invention, a distance, in a tire axial direction, between a groove edge of the main groove and the circumferential portion of each first sipe ranges from 2 mm to 6 mm.

In the pneumatic tire of the present invention, it is preferable that the land portion does not include a groove that has one end connected to the main groove, and has a groove width which is greater than 2 mm.

In the pneumatic tire of the present invention, the land portion adjacent to the main groove includes a plurality of first sipes spaced from each other in the tire circumferential direction. Each first sipe includes the circumferential portion that extends along the tire circumferential direction, and the axial portion that extends from at least one of end portions of the circumferential portion toward the main groove. Namely, the land portion includes regions which are disposed between the first sipes spaced from each other and have a high stiffness, and regions, having a low stiffness, in which the first sipes are formed. Therefore, when the land portion contacts with a ground, for example, temporary shock wave is applied to air in the main grooves due to the regions having a high stiffness, to prevent generation of standing wave in the main grooves, thereby reducing pipe resonance. Accordingly, in the pneumatic tire of the present invention, noise performance is improved.

### BRIEF DESCRIPTION OF THE DRAWINGS

FIG. 1 is a development of a tread portion according to one embodiment of the present invention;
FIG. 2 is an enlarged view of a left side portion of the tread portion shown in FIG. 1;
FIG. 3 is a plan view illustrating a ground contact surface of the tire under a normal load;

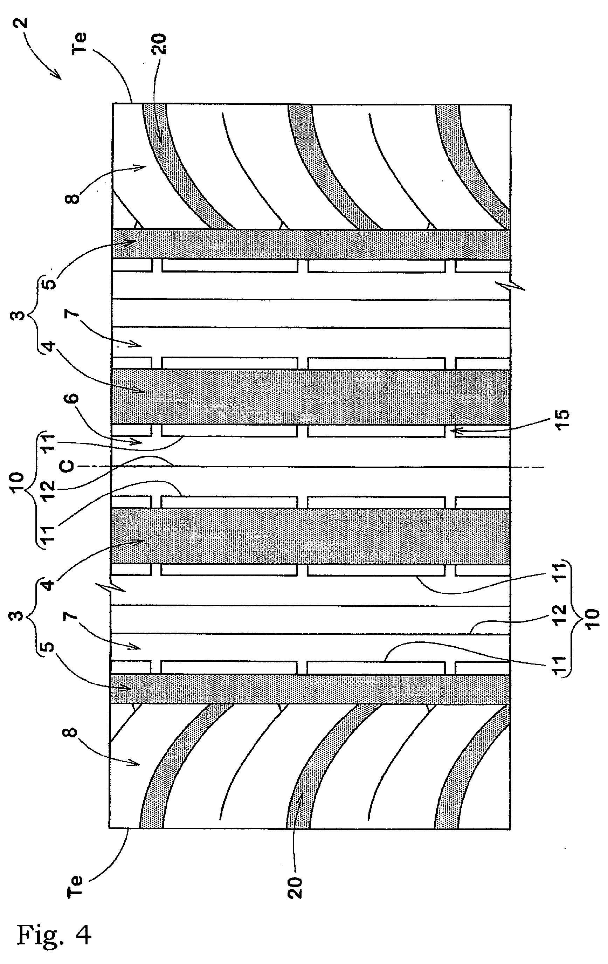

FIG. 4 is a development of a tread portion according to another embodiment of the present invention;

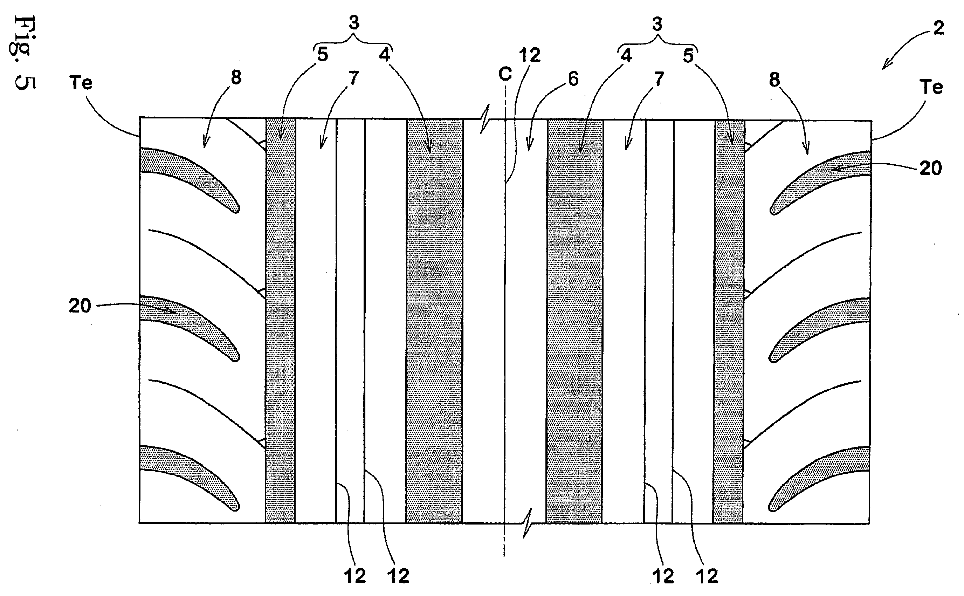

FIG. 5 is a development of a tread portion of a tire according to a comparative example;

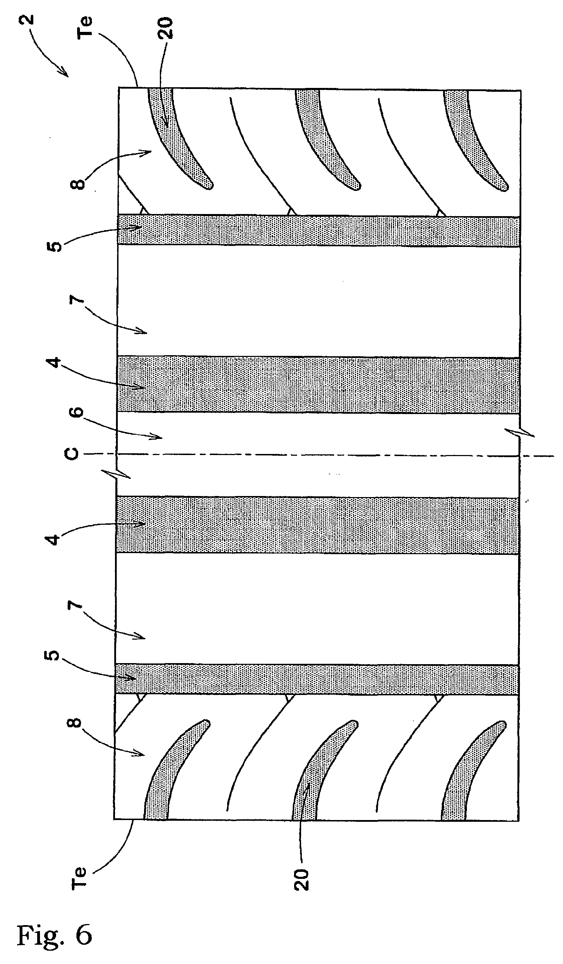

FIG. 6 is a development of a tread portion of a tire according to still another comparative example; and
FIG. 7 is a plan view schematically illustrating noise test conducted by an actually running car.

### DESCRIPTION OF THE PREFERRED EMBODIMENTS

Hereinafter, an embodiment of the present invention will be described with reference to the drawings.

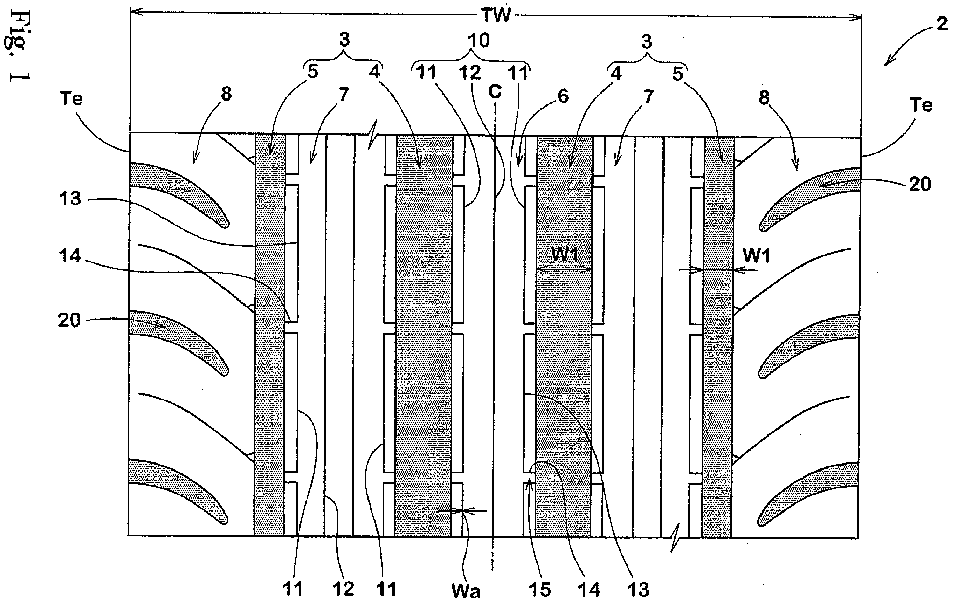

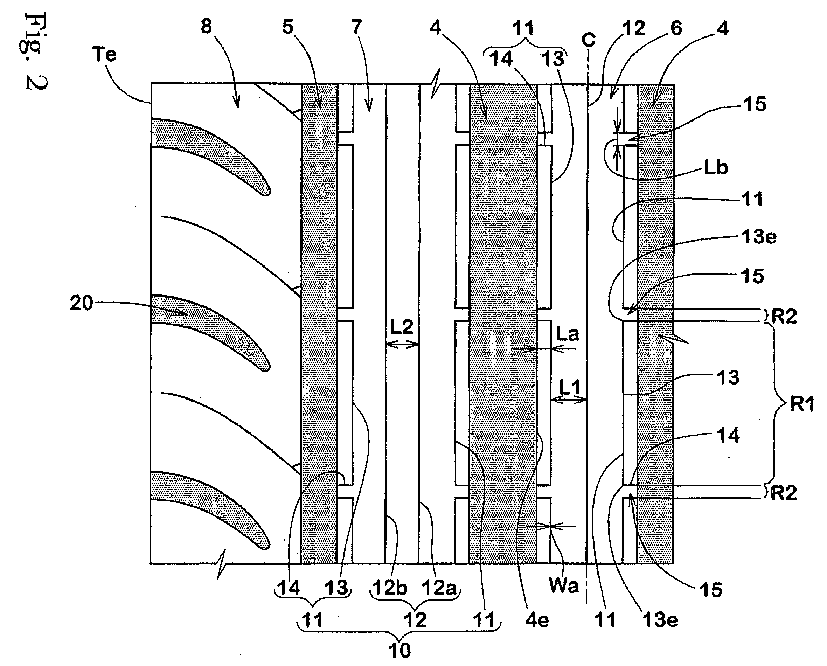

FIG. 1 is a development of a tread portion 2 of a pneumatic tire according to one embodiment of the present invention. FIG. 2 is an enlarged view of a left side portion of the tread portion shown in FIG. 1. The pneumatic tire (hereinafter, also referred to simply as a "tire") of the present embodiment is advantageously used as, for example, a pneumatic tire for passenger cars.

As shown in FIG. 1, the tread portion 2 has at least one main groove 3 that continuously extends in the tire circumferential direction. The main groove 3 of the present embodiment includes a pair of center main grooves 4 that extend along and bilaterally to the tire equator C, and a pair of shoulder main grooves 5 that extend in regions outward of the center main grooves 4 in the tire axial direction.

In the present embodiment, both the main grooves 4, 5 extend linearly along the tire circumferential direction. The main grooves 4, 5 thus formed enable water in the grooves to be smoothly drained backward in the tire rotating direction. The main groove 3 may extend zigzag or extend in a corrugated manner.

A groove width W1 of each of the main grooves 4, 5 may be variously defined in a conventional manner. In order to ensure not only drainage performance but also stiffness of the tread portion 2, the groove width W1 for each main groove 3 preferably ranges, for example, from 2.0% of a tread contact width TW to 8.0% thereof.

In the tread portion 2, a plurality of land portions are formed by the main grooves 3. In the present embodiment, the land portions include a center land portion 6, a pair of middle land portions 7, and a pair of shoulder land portions 8.

The center land portion 6 is defined between the pair of center main grooves 4. The middle land portions 7 are defined between the center main grooves 4 and the shoulder main grooves 5, respectively. The shoulder land portions 8 are defined between the shoulder main grooves 5 and ground contact ends Te, respectively. The shapes of the land portions of the tread portion 2 are not limited to such shapes, and the land portions may have various shapes.

The "ground contact ends" are defined as outermost ground contact positions, in the tire axial direction, of the tire in a normal load state. The normal load state represents a state where, in a normal state where the tire is mounted to a normal rim, is inflated with air to a normal internal pressure, and is under no load, a normal load is applied to the tire and the tire is contacted with a flat ground surface with a camber angle of 0°. In the normal state, a distance, in the tire axial direction, between the ground contact ends Te, Te, is defined as the tread contact width TW. Unless otherwise specified, dimensions of components of the tire and the like represent values measured in the normal state.

The "normal rim" represents a rim that is defined, in a standard system including a standard with which the tire complies, by the standard for each tire, and is the "standard rim" in the JATMA standard, the "Design Rim" in the TRA standard, or the "Measuring Rim" in the ETRTO standard. The "normal internal pressure" represents an air pressure that is defined, in a standard system including a standard with which the tire complies, by the standard for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard. When the tire is for passenger cars, the normal internal pressure is 180 kPa.

The "normal load" represents a load that is defined, in a standard system including a standard with which the tire complies, by the standard for each tire, and is the "maximum load capacity" in the JATMA standard, the "maximum value" recited in the table "TIRE LOAD LIMITS AT VARIOUS COLD INFLATION PRESSURES" in the TRA standard, or the "LOAD CAPACITY" in the ETRTO standard. When the tire is for passenger cars, the normal load is a load corresponding to 88% of the load described above.

In the present embodiment, the center land portion 6 includes sipes 10 that are obtained by cutting. The sipes 10 include, for example, first sipes 11 and a second sipe 12.

The first sipes 11 are disposed, for example, bilaterally to the tire equator C.

As shown in FIG 2, the number of the first sipes 11 is plural, and the plurality of the first sipes 11 are spaced from each other in the tire circumferential direction.

Each first sipe 11 includes a circumferential portion 13 and axial portions 14.

The circumferential portion 13 linearly extends along the tire circumferential direction. Thus, stiffness of a pattern near the circumferential portions 13 of the center land portion 6 becomes uniform along the tire circumferential direction.

In the present embodiment, the axial portions 14 extend from end portions 13e of the circumferential portion 13 toward the center main groove 4. Thus, the center land portion 6 includes regions R1, having a low stiffness, in which the first sipes 11 are formed, and regions R2 each of which is disposed between the first sipes 11 spaced from each other and has a high stiffness. Therefore, when the center land portion 6 contacts with a ground, for example, temporary shock wave is applied to air in the center main grooves 4 due to the regions R2 having a high stiffness, to prevent generation of standing wave in the center main grooves 4, thereby reducing pipe resonance. Accordingly, the pneumatic tire of the present invention has improved noise performance. In a case where each first sipe 11 is formed merely by the circumferential portion 13, a difference in stiffness between the regions R1 and the regions R2 is reduced, and an effect of allowing the temporary shock wave to prevent generation of the standing wave is reduced.

Thus, in the present invention, the first sipes 11 are spaced from each other in the tire circumferential direction, thereby improving noise performance. Accordingly, since a groove volume of each center main groove 4 is not reduced, the tire of the present invention maintains advantageous drainage performance.

A distance La, in the tire axial direction, between the circumferential portion 13 of each first sipe 11 and a groove edge 4e of the corresponding center main groove 4 ranges from 2 mm to 6 mm. In a case where the distance La is less than 2 mm, stiffness, in the tire axial direction, of a first outer portion which is positioned outward of the circumferential portion 13 of each first sipe 11 in the tire axial direction is excessively reduced, and a starting point of uneven wear may be generated. When the distance La is greater than 6 mm, stiffness of the first outer portion, that is, stiffness of the regions R1, is enhanced, and a difference in stiffness between the regions R1 and the regions R2 is reduced. Therefore, temporary shock wave is reduced, to reduce an effect of preventing generation of standing wave. Therefore, the distance La, in the tire axial direction, between the circumferential portion 13 and the groove edge 4e of the corresponding center main groove 4 more preferably ranges from 3 mm to 5 mm.

The axial portions 14 are formed at the end portions 13e, 13e on both sides, respectively, of each circumferential portion 13. Thus, great shock wave can be temporarily applied to air in each center main groove 4 at the end portions 13e, 13e on both the sides of each circumferential portion 13.

The axial portions 14 communicate with the center main grooves 4 in the present embodiment. Thus, the above-described effect can be more advantageously exerted.

The axial portions 14 linearly extend along the tire axial direction. Due to the axial portions 14 thus formed, stiffness in the tire axial direction is assuredly maintained high in the regions R1. Therefore, generation of standing wave can be more assuredly prevented.

In the present embodiment, an interruption portion 15 which does not have sipes 10 is formed between the first sipes 11, 11 that are adjacent to each other in the tire circumferential direction. The interruption portion 15 allows stiffness of a pattern of the center land portion 6 to be assuredly maintained high.

A length Lb, in the tire circumferential direction, of the interruption portion 15 preferably ranges from 2 mm to 10 mm. When the length Lb of the interruption portion 15 is less than 2 mm, application of temporary shock wave to air flowing in the center main grooves 4 is reduced, whereby an effect of improving noise performance may be insufficient. When the length Lb of the interruption portion 15 is greater than 10 mm, the application of the shock wave described above may continue for a long time, and standing wave may be generated due to the shock wave, whereby noise performance may be deteriorated. Therefore, the length Lb of the interruption portion 15 more preferably ranges from 3 mm to 9 mm.

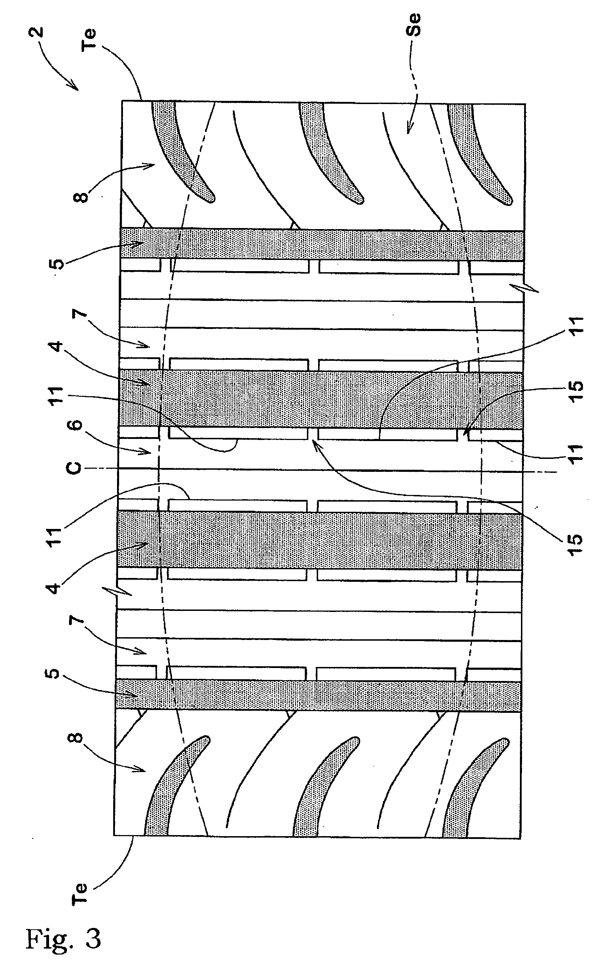

FIG. 3 shows an example of a ground contact surface Se under a normal load, and the ground contact surface Se is indicated by an imaginary line. As shown in FIG 3, when the tire is rotated once under the normal load, the at least one interruption portion 15 always appears, in the tire circumferential direction, on the ground contact surface Se of the tread portion 2 in the land portion having the first sipes 11. Namely, in the land portion having the first sipes 11, the region R2 having a high stiffness in the tire circumferential direction and the region R1 having a stiffness less than the region R2 are always positioned on the ground contact surface Se. Therefore, the above-described effect is advantageously exerted, to further reduce noise. When the number of the interruption portions 15 on the ground contact surface Se under the normal load, is greater than five, the region R2 having a high stiffness is increased, and standing wave may be generated due to temporary shock wave. Accordingly, the number of the interruption portions 15 on the ground contact surface Se under the normal load is preferably less than or equal to four, and more preferably two.

On the ground contact surface Se under the normal load, at least one interruption portion 15 is preferably positioned in at least one of the land portions bilaterally to each of the main grooves 4, 5.

As shown in FIG 2, the second sipe 12 is formed, in the center land portion 6, inward of the first sipes 11 in the tire axial direction.

The second sipe 12 linearly extends continuously in the tire circumferential direction. The second sipe 12 thus formed enables stiffness, in the tire axial direction, of the center land portion 6 to be reduced along the tire circumferential direction, to reduce exciting force applied from a road surface. Accordingly, noise performance is further improved.

The second sipe 12 does not intersect the first sipes 11. Namely, in the present embodiment, the second sipe 12 is spaced from the first sipes 11 in the tire axial direction. The second sipe 12 thus formed prevents excessive reduction of the stiffness of the center land portion 6. Therefore, steering stability and wear resistance are assuredly maintained high.

The second sipe 12 is disposed in the mid-position, in the tire axial direction, of the center land portion 6. Thus, stiffness in the tire axial direction is equally reduced on both sides, in the tire axial direction, of the center land portion 6. Therefore, exciting force applied from a road surface is equally dispersed, thereby improving noise performance. In the present embodiment, the second sipe 12 is disposed on the tire equator C.

A distance L1, in the tire axial direction, between each of the first sipes 11 and the second sipe 12 preferably ranges from 4 mm to 10 mm. When the distance L1 between the first sipe 11 and the second sipe 12 is greater than 10 mm, the stiffness, in the tire axial direction, of the center land portion 6 cannot be effectively reduced, and noise performance may not be improved. When the distance L1 between the first sipe 11 and the second sipe 12 is less than 4 mm, wear resistance or steering stability may be deteriorated.

The depth (not shown) of each of the sipes 10 preferably ranges from 1.5 mm to 5.0 mm. When the depth of the sipes 10 is less than 1.5 mm, for example, the stiffness of the regions R1 in the center land portion 6 cannot be reduced, and shock wave may be continuously applied to air in the center main grooves 4 to generate standing wave. When the depth of each sipe 10 is greater than 5.0 mm, the stiffness of the center land portion 6 is excessively reduced, whereby steering stability may be deteriorated. Therefore, the depth of each sipe 10 more preferably ranges from 2.0 mm to 4.5 mm. Further, the depth of each sipe 10 is preferably less than the depth (not shown) of the main groove 3 adjacent to said sipe 10, and more preferably ranges from 15% of the depth of the adjacent main groove 3 to 65% thereof.

A width Wa of each sipe 10 is preferably less than or equal to 1.0 mm. Namely, when the width Wa of each sipe 10 is greater than 1.0 mm, the stiffness of the center land portion 6 is excessively reduced, and steering stability or wear resistance may be deteriorated. Therefore, the width Wa of each sipe 10 is more preferably less than or equal to 0.8 mm.

In the present embodiment, the center land portion 6 does not include a groove that has one end connected to the center main groove 4, and has a groove width which is greater than 2 mm. When the center land portion 6 has a groove having a groove width that is greater than 2 mm, pipe resonance in the center main grooves 4 may be excited due to pumping sound being generated in the grooves by contact with a road surface, and noise performance may be deteriorated. Further, when the center land portion 6 has the groove, the stiffness of the center land portion 6 is excessively reduced, whereby steering stability may be deteriorated. Therefore, when the center land portion 6 does not have a groove having a groove width that is greater than 2 mm, as in the present embodiment, noise performance and steering stability are assuredly maintained high.

In the present embodiment, each middle land portion 7 also has sipes 10 that include the first sipes 11 and the second sipes 12. The first sipes 11 are formed on both sides, in the tire axial direction, of each middle land portion 7. Namely, the first sipes 11 are formed so as to be adjacent to the center main grooves 4 and the shoulder main grooves 5. Thus, temporary shock wave can be applied from both sides, in the tire axial direction, of each center main groove 4. Further, temporary shock wave can be applied to air in the shoulder main grooves 5. Therefore, noise performance is further improved. Hereinafter, the sipes 10 of the middle land portions 7 will be described focusing on difference from the sipes 10 of the center land portion 6.

The number of the second sipes 12 in each middle land portion 7 is two. In the present embodiment, the two second sipes 12 are an inner second sipe 12a, and an outer second sipe 12b disposed outward of the inner second sipe 12a in the tire axial direction. In the present embodiment, each middle land portion 7 has a width, in the tire axial direction, which is greater than the center land portion 6. Therefore, the number of the second sipes 12 in each middle land portion 7 is greater than the number of the second sipes 12 in the center land portion 6, whereby stiffness of the middle land portions 7 is reduced, and exciting force from a road surface is effectively reduced, to improve noise performance.

In order to advantageously exert such an effect, a distance L2, in the tire axial direction, between the inner second sipe 12a and the outer second sipe 12b preferably ranges from 4 mm to 10 mm. Further, a pitch between the sipes 10, 10 adjacent to each other is more preferably uniform.

Each shoulder land portion 8 has a plurality of shoulder transverse grooves 20 in order to enhance drainage performance, and the plurality of shoulder transverse grooves 20 extend from the ground contact ends Te inward in the tire axial direction and are arranged in the tire circumferential direction. Thus, each shoulder land portion 8 has a region having a high stiffness and a region having a low stiffness, which are formed along the tire circumferential direction. Namely, an effect obtained when the first sipes 11 are formed in the shoulder land portions 8, is small. Therefore, the shoulder land portions 8 do not have the first sipes 11.

A contact pressure applied to each shoulder land portion 8 is less than a contact pressure applied to the center land portion 6 during straight running. Namely, exciting force applied to each shoulder land portion 8 from a road surface is less than exciting force applied to the center land portion 6 from the road surface. Therefore, in the present embodiment, the shoulder land portions 8 do not have the second sipe 12. Thus, the stiffness of the shoulder land portions 8 is assuredly maintained high, to improve wear resistance or steering stability. Thus, in the present embodiment, the shoulder land portions 8 do not have the first sipes 11 and the second sipes 12. The shoulder land portions 8 are not limited to those as described above. The shoulder land portions 8 may have the first sipes 11 and the second sipes 12.

Although the pneumatic tire according to the present invention has been described above in detail, the present invention is not limited to the specific embodiment described above and various modifications can be made to implement the present invention.

### [Examples]

Pneumatic tires each having a fundamental pattern shown in FIG. 1 and the size of 235/45R18 were produced as sample tires according to the specifications indicated in Table 1. Noise performance, drainage performance, and steering stability of each of the sample tires were tested. Common specifications among the sample tires and test methods are as described below. In Comparative example 2 indicated in Table 1, depths of the center main grooves and the shoulder main grooves were less than depths of the center main grooves and the shoulder main grooves in other comparative examples and examples. All the grooves had the same groove width.

### Tread contact width TW: 19.0 mm

Depth of center main groove: 8.2 mm (except for Comparative example 2)
Depth of center main groove: 5.0 mm (for Comparative example 2)
Depth of shoulder main groove: 8.2 mm (except for Comparative example 2)
Depth of shoulder main groove: 5.0 mm (for Comparative example 2)
Depth of shoulder transverse groove: 8.2 mm
Width of sipe: 0.8 mm

### <Noise performance (Coasting noise by an actual car)>

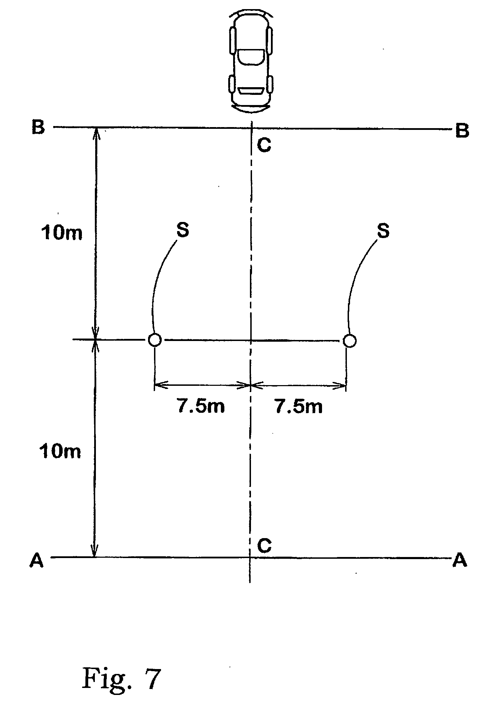

The sample tires of each of examples and comparative examples were mounted to all the wheels of a passenger car having an engine displacement of 2000 cc, under the following conditions. As shown in FIG. 7, the test vehicle was driven between A and B by one test driver so as to be coasted in a state where an engine was stopped and a gear was in a neutral position, in compliance with the ECE R117. A maximum noise level between A and B was calculated. Noise measurement tools S were mounted, at positions that were higher than the ground level by 1.2±0.02 m, bilaterally to the vehicle running center C-C, so as to be spaced from each other by 7.5±0.05 m. The results were evaluated based on a difference (dB (A)) from a noise level of Comparative example 1. The greater the value is, the better the performance is.
Rim: 8.0J×18
Internal pressure: 176 kPa (average)
Load: 4.60 kN (average)
Speed between A and B: 70 km/h to 90 km/h

### <Drainage performance>

A test driver drove the test vehicle at 80 km/h so as to run over a puddle, having a water depth of 10 mm and a length of 20 m, which was formed in a test course with an asphalt road surface and with a radius of 100 m. At this time, an average lateral acceleration (lateral G) applied to front wheels was calculated. The results are each indicated as an index that is obtained based on a value of Comparative example 1 being 100. The greater the index is, the better the performance is.

### <Steering stability>

A test driver drove the test vehicle so as to run on a test course with a dry asphalt road surface. At this time, sensory evaluation by the test driver was made for running characteristics associated with handling responsiveness, stiffness, grip performance, and the like, during cornering. The results are each indicated as a score that is obtained based on a value of Comparative example 1 being 100. The greater the score is, the better the steering stability is.

The results of the test are indicated in Table 1.

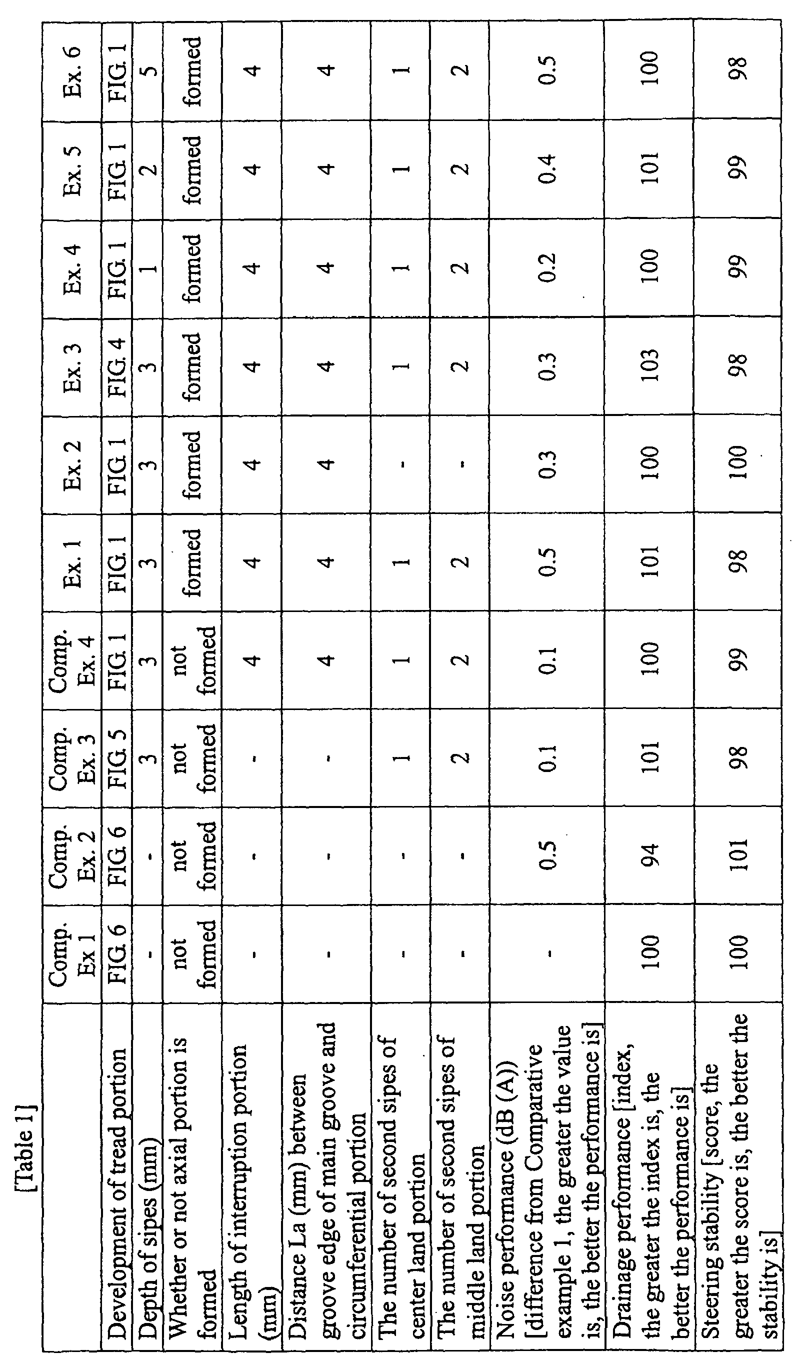

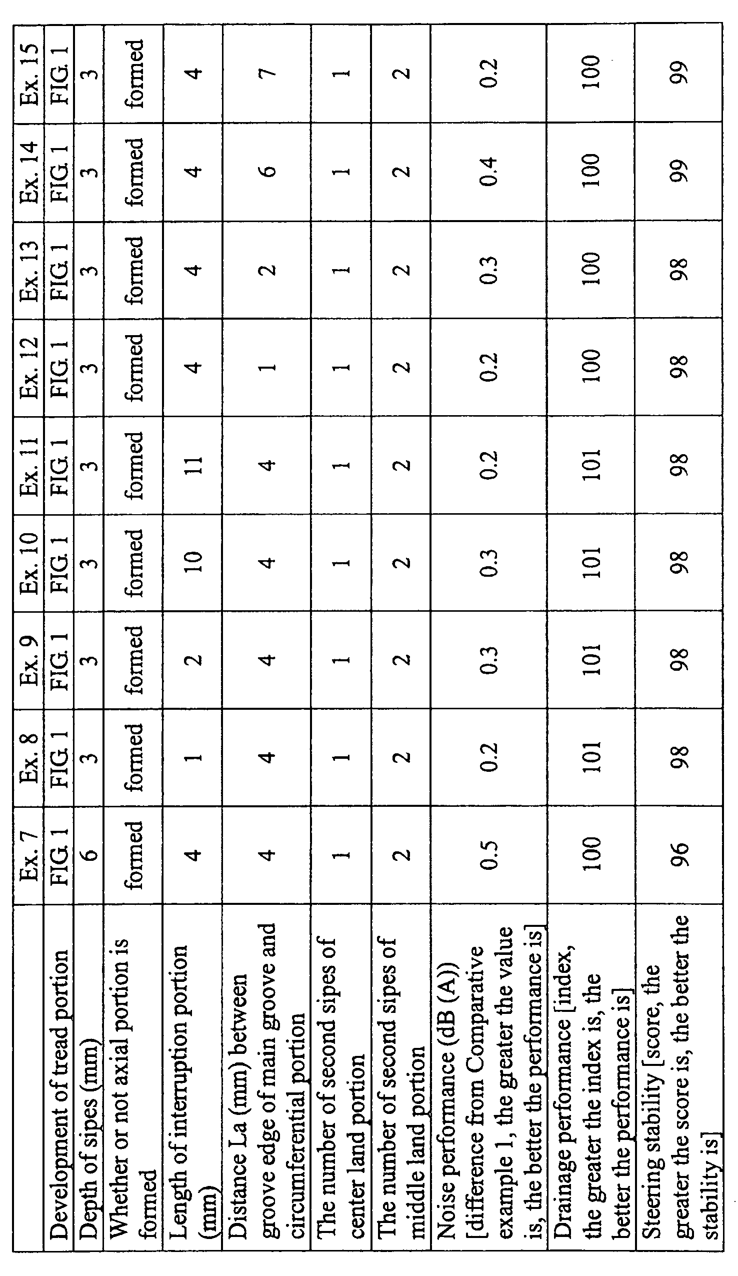

The results of the test indicate that the tires of examples are significantly improved as compared to the tires of comparative examples.

## Claims

1. A pneumatic tire having a tread portion (2) in which at least one main groove (3) continuously extends in a tire circumferential direction, and at least one land portion (6, 7, 8) is adjacent to the main groove (3), wherein
the land portion (6, 7, 8) includes a plurality of sipes (10) that includes a plurality of first sipes (11) that are spaced from each other in the tire circumferential direction, and
each of the first sipes (11) includes: a circumferential portion (13) that extends along the tire circumferential direction; and an axial portion (14) that extends from at least one of end portions (13e) of the circumferential portion (13) toward the main groove (3),
**characterized in that**
a distance (La), in a tire axial direction, between a groove edge (4e) of the main groove (3) and the circumferential portion (13) of each first sipe (11) ranges from 2 mm to 6 mm.

2. The pneumatic tire according to claim 1, wherein the axial portion (14) communicates with the main groove (3).

3. The pneumatic tire according to claim 1 or 2, wherein the axial portion (14) is formed on each of both the end portions (13e) of the circumferential portion (13) in each first sipe (11).

4. The pneumatic tire according to one of claims 1 to 3, wherein
the land portion (6, 7, 8) has an interruption portion (15) formed between the first sipes (11) adjacent to each other in the tire circumferential direction, and the interruption portion (15) has no sipes (10), and
when, in a normal state where the tire is mounted to a normal rim, is inflated with air to a normal internal pressure, and is under no load, a normal load is applied to the tire, and the tire is contacted with a flat ground surface with a camber angle of 0° and is rotated once, at least one interruption portion (15) always appears on a ground contact surface (Se) of the tread portion (2).

5. The pneumatic tire according to one of claims 1 to 4, wherein
the sipes (10) include a second sipe (12) that continuously extends in the tire circumferential direction, and
the second sipe (12) is formed so as not to intersect the first sipes (11).

6. The pneumatic tire according to one of claims 1 to 5, wherein a depth of the sipes (10) ranges from 1.5 mm to 5.0 mm.

7. The pneumatic tire according to one of claims 4 to 6, wherein a length (Lb), in the tire circumferential direction, of the interruption portion (15) ranges from 2 mm to 10 mm.

8. The pneumatic tire according to one of claims 1 to 7, wherein the land portion (6, 7, 8) does not include a groove that has one end connected to the main groove (3), and has a groove width which is greater than 2 mm.

## Patentansprüche

1. Luftreifen mit einem Laufflächenabschnitt (2), in welchem sich zumindest eine Hauptrille (3) durchgehend in einer Umfangsrichtung des Reifens erstreckt und sich zumindest ein Landabschnitt (6, 7, 8) benachbart zu der Hauptrille (3) befindet, wobei
der Landabschnitt (6, 7, 8) eine Mehrzahl von Feinschnitten (10) umfasst, die eine Mehrzahl von ersten Feinschnitten (11) umfasst, die voneinander in Umfangsrichtung des Reifens beabstandet sind, und
ein jeder der ersten Feinschnitte (11) umfasst: einen Umfangsabschnitt (13), der sich entlang der Umfangsrichtung des Reifens erstreckt; und einen axialen Abschnitt (14), der sich von zumindest einem von Endabschnitten (13e) des Umfangsabschnitts (13) zu der Hauptrille (3) hin erstreckt,
**dadurch gekennzeichnet, dass**
ein Abstand (La) in einer axialen Richtung des Reifens zwischen einer Rillenkante (4e) der Hauptrille (3) und dem Umfangsabschnitt (13) jedes ersten Feinschnitts (11) in einem Bereich von 2 mm bis 6 mm liegt.

2. Luftreifen nach Anspruch 1,
wobei der axiale Abschnitt (14) mit der Hauptrille (3) kommuniziert.

3. Luftreifen nach Anspruch 1 oder 2,
wobei der axiale Abschnitt (14) an einem jeden von beiden Endabschnitten (13e) des Umfangsabschnitts (13) in jedem ersten Feinschnitt (11) gebildet ist.

4. Luftreifen nach einem der Ansprüche 1 bis 3, wobei
der Landabschnitt (6, 7, 8) einen Unterbrechungsabschnitt (15) aufweist, der zwischen den ersten Feinschnitten (11) benachbart zueinander in der Umfangsrichtung des Reifens gebildet ist, und der Unterbrechungsabschnitt (15) keine Feinschnitte (10) aufweist, und
in einem normalen Zustand, in welchem der Reifen auf eine normale Felge aufgezogen ist, mit Luft auf einen normalen Innendruck aufgepumpt ist und nicht unter Last steht, eine normale Last auf den Reifen aufgebracht ist, und der Reifen mit einer ebenen Bodenfläche mit einem Sturzwinkel von 0° in Kontakt steht und einmal gedreht wird, immer zumindest ein Unterbrechungsabschnitt (15) an einer Bodenkontaktfläche (Se) des Laufflächenabschnitts (2) erscheint.

5. Luftreifen nach einem der Ansprüche 1 bis 4, wobei
die Feinschnitte (10) einen zweiten Feinschnitt (12) umfassen, der sich durchgehend in der Umfangsrichtung des Reifens erstreckt, und
der zweite Feinschnitt (12) derart gebildet ist, dass er die ersten Feinschnitte (11) nicht schneidet.

6. Luftreifen nach einem der Ansprüche 1 bis 5,
wobei eine Tiefe der Feinschnitte (10) in einem Bereich von 1,5 mm bis 5,0 mm liegt.

7. Luftreifen nach einem der Ansprüche 4 bis 6,
wobei eine Länge (Lb) des Unterbrechungsabschnitts (15) in der Umfangsrichtung des Reifens in einem Bereich von 2 mm bis 10 mm liegt.

8. Luftreifen nach einem der Ansprüche 1 bis 7,
wobei der Landabschnitt (6, 7, 8) keine Rille umfasst, die ein Ende aufweist, das mit der Hauptrille (3) verbunden ist, und eine Rillenbreite aufweist, die größer als 2 mm ist.

## Revendications

1. Bandage pneumatique ayant une portion formant bande de roulement (2) dans laquelle au moins une rainure principale (3) s'étend en continu dans une direction circonférentielle du pneumatique, et au moins une portion en relief (6, 7, 8) est adjacente à la rainure principale (3), dans lequel
la portion en relief (6, 7, 8) inclut une pluralité de fentes (10) qui incluent une pluralité de premières fentes (11) qui sont espacées les unes des autres dans la direction circonférentielle du pneumatique, et chacune des premières fentes (11) inclut : une portion circonférentielle (13) qui s'étend le long de la direction circonférentielle du pneumatique ; et une portion axiale (14) qui s'étend depuis au moins une des portions terminales (13e) de la portion circonférentielle (13) vers la rainure principale (3),
**caractérisé en ce que**
une distance (La), dans une direction axiale du pneumatique, entre un bord de rainure (4e) de la rainure principale (3) et la portion circonférentielle (13) de chaque première fente (11) est dans la plage de 2mmà6mm.

2. Bandage pneumatique selon la revendication 1, dans lequel la portion axiale (14) communique avec la rainure principale (3).

3. Bandage pneumatique selon la revendication 1 ou 2, dans lequel la portion axiale (14) est formée sur chacune des deux portions terminales (13e) de la portion circonférentielle (13) dans chaque fente (11).

4. Bandage pneumatique selon l'une des revendications 1 à 3, dans lequel
la portion en relief (6, 7, 8) présente une portion interrompue (15) formée entre les premières fentes (11) adjacentes les unes aux autres dans la direction circonférentielle du pneumatique, et la portion interrompue (15) ne comporte aucune fente (10), et
quand, dans un état normal dans lequel le pneumatique est monté sur une jante normale, est gonflé avec de l'air à une pression interne normale, et ne se trouve pas sous charge, une charge normale est appliquée au pneumatique, et le pneumatique est en contact avec une surface au sol plane avec un angle de cambrage de 0° et est mis en rotation une fois, au moins une portion interrompue (15) apparaît toujours sur une surface de contact au sol (Se) de la portion formant bande de roulement (2).

5. Bandage pneumatique selon l'une des revendications 1 à 4, dans lequel
les fentes (10) incluent une seconde fente (12) qui s'étend en continu dans la direction circonférentielle du pneumatique, et
la seconde fente (12) est formée de manière à ne pas recouper les premières fentes (11).

6. Bandage pneumatique selon l'une des revendications 1 à 4, dans lequel une profondeur des fentes (10) est dans la plage de 1,5 mm à 5,0 mm.

7. Bandage pneumatique selon l'une des revendications 4 à 6, dans lequel une longueur (Lb), dans la direction circonférentielle du pneumatique, de la portion interrompue (15) est dans la plage de 2 mm à 10 mm.

8. Bandage pneumatique selon l'une des revendications 1 à 7, dans lequel la portion en relief (6, 7, 8) n'inclut pas de rainure qui comporte une extrémité connectée à la rainure principale (3), et a une largeur de rainure qui est plus grande que 2 mm.
